# EUROPEAN PATENT APPLICATION

(11) **EP 1 524 762 A2**
(43) Date of publication of application: **20.04.2005**
(21) Application number: 04105013.9
(22) Date of filing: 13.10.2004
(51) Int. Cl.: H02P 9/10, H02P 9/48, H02P 9/30

(54) **Output control apparatus for synchronous power generator**

(30) Priority: 17.10.2003 JP 2003357815
(71) Applicant: HONDA MOTOR CO., LTD., Tokyo (JP)
(72) Inventor: NAKAJIMA, Hiroyuki, K. K. HONDA GIJUTSU KENKYUSHO, SAITAMA (JP); MURAOKA, Yuuki, K. K. HONDA GIJUTSU KENKYUSHOSH, SAITAMA (JP); SHIMADA, Nobuhiro, K. K. HONDA GIJUTSU KENKYUSHO, SAITAMA (JP); MORIYAMA, Ryuji, K. K. HONDA GIJUTSU KENKYUSHO, SAITAMA (JP)
(74) Representative: Poulin, Gérard

(57) **Abstract**

To increase and reduce the amount of power generation for avoiding unnecessary power generation, and to charge a battery adequately while restricting change of the amount of power generation during acceleration.

A control voltage value for controlling the voltage of generated power is set to a control voltage value setting unit (67) for each acceleration and normal operation as a function of the number of engine revolution. Acceleration is determined based on the number of engine revolution detected by a number of engine revolution determining unit 66 and an output from a throttle sensor (69) to decide an action stage of switching control of a regulator target voltage V. The target voltage V is switched according to the action stage. An advance and lag amount setting unit (70) decides an energizing timing to respective phases of a stator coil (35) so that a battery voltage Vb is astringed to the target voltage V. A driver (65) controls a rectifier (36) according to the decided amount of advance and lag, and changes the energizing timing. When an action mode in which the target voltage V is on the low side continues for a long time, the target voltage is returned to the high side.

## Description

### Technical Field

The present invention relates to an output control apparatus for a synchronous power generator and, more specifically, to an output control apparatus for a synchronous power generator preferable for securing the suitable amount of power generation while desirably maintaining an accelerating property.

### Background Art

A three-phase synchronous power generator driven by an engine is used as a power generating apparatus for a vehicle, and an alternate current generated by the three-phase synchronous power generator is rectified by a three-phase full-wave rectifier and is used for charging a battery. In JP-A-2002-119095, a three-phase synchronous power generator for increasing a power generating output by energizing a stator coil with a lag of a constant electric angle and controlling an energizing duty so as to prevent an output voltage from exceeding a regulating voltage in a low revolution range is disclosed. According to this synchronous power generator, since variations in load can be prevented by avoiding interruption of power generation by a regulator while securing the amount of power generation in the low revolution range, a rotation of the engine can be prevented from becoming unstable in the low revolution range .

Patent Document 1: JP-A-2002-119095.

### Disclosure of the Invention

Problems that the Invention is to Solve

In the synchronous power generator, a function for determining acceleration of the engine which drives the power generator is not included. Therefore, the amount of power generation may vary irrespective of present or absence of acceleration of the engine. In other words, load for the engine varies. As a consequence, variations in load may occur in association with variations in the amount of power generation during acceleration of the engine.

It is an object of the present invention to provide an output control apparatus for a synchronous power generator for controlling variations in the amount of power generation even during acceleration while maintaining the amount of power generation which can maintain a battery in a preferable state.

### Means for Solving the Problems

In order to achieve the above-described object, the present invention provides an output control apparatus for a synchronous power generator having a rotor provided with a magnetic field flux generating magnet means driven by an engine and a stator on which a stator coil for generating power generating output is wound, firstly characterized by being provided with: throttle operating velocity detecting means for detecting the speed of change of a throttle opening, means for determining an accelerating state of the engine based at least on the speed of change of the throttle opening and restricting the amount of power generation, and control means for prohibiting restriction of the amount of power generation when the restricted amount of power generation reaches a predetermined amount, and permitting restriction of the amount of power generation when the restricted amount of power generation is restored to the predetermined amount.

Secondly, the present invention is characterized in that the restricted amount of power generation is determined by a function of time in which the amount of power generation is restricted.

Thirdly, the present invention is characterized in that the function of time is weighed in different ways so that the restricted amount of power generation is recognized to be a large value when restriction of the amount of power generation is permitted and is recognized to be a small value when restriction of the amount of power generation is prohibited.

Fourthly, the present invention further includes a regulator for restricting a voltage of generated power of the power generator to a predetermined regulator target voltage, and is characterized in that the means for restricting the amount of power generation includes means for switching the regulator target voltage and means for controlling the phase energizing angle of the power generator so that the difference between the regulator target voltage and the battery voltage is compensated.

Fifthly, the present invention is characterized in that when the number of engine revolution exceeds the maximum number of revolution for execution of restriction, restriction of the amount of power generation is prohibited.

Sixthly, the present invention further includes means for determining the number of engine revolution for determining the accelerating state, and is characterized in that when the number of engine revolution does not reach the minimum number of revolution for execution of restriction within a predetermined execution decision period, restriction of the amount of power generation is prohibited.

### Advantage of the Invention

According to the first characteristic, while restriction of the amount of power generation is performed when the engine is accelerated, the accelerating property is improved, restriction of the amount of power generation is prohibited when restriction of the amount of power generation is excessive. Therefore, excessive discharge of a battery may be prevented. Consequently, the life of the battery can be extended. When the amount of power generation restricted by prohibiting restriction of the amount of power generation is recovered, restriction of the amount of power generation is permitted again. Therefore, influence of the accelerating property can be reduced.

According to the second characteristic, since the amount of power generation can be determined by time, it is easy to control. According to the third characteristic, excessive discharge can be prevented further preferably.

According to the fourth characteristic, when the regulator target voltage is switched, the voltage of the generated power is adjusted according to the switched target voltage for controlling the amount of power generation, it is easy to control, and power generation friction can be reduced in comparison with a regulator short circuit system.

According to the fifth characteristic, when the number of engine revolution is high, the rotational inertia is large even when the amount of power generation is large, and hence the influence on the acceleration performance is small. Therefore, in this case, the battery can be charged sufficiently without restricting the amount of power generation.

According to the sixth characteristic, for example, when the present invention is applied to a vehicle and the vehicle moves on a rising hill, the number of engine revolution can hardly be increased if a lord is too large even when a throttle is quickly opened. In this case, restriction of the amount of power generation is prohibited, the battery can be charged sufficiently.

### Brief Description of the Drawings

Fig. 1 is a block diagram showing a function of a principal portion of an output control apparatus according to an embodiment of the present invention.
Fig. 2 is a cross-sectional view showing a principal portion of a motorcycle provided with a power generator to which the output control apparatus of the present invention is applied.
Fig. 3 is a cross-sectional view of a motor ACG according to an embodiment of the present invention.
Fig. 4 is an electric system diagram of a principal portion of a motorcycle to which the output control apparatus of the present invention is applied.
Fig. 5 is a time chart showing an outline of switching operation of a regulator target voltage.
Fig. 6 is a main flowchart of switching process of the regulator target voltage.
Fig. 7 is a flowchart showing determination of switching operation of the regulator target voltage.
Fig. 8 is a flowchart for calculating the regulator target voltage.
Fig. 9 is a flowchart for first execution decision.
Fig. 10 is a flowchart for second execution decision.
Fig. 11 is a flowchart for restoration determination.
Fig. 12 is a flowchart of restoration termination decision.
Fig. 13 is a time chart showing an outline of an integrating process.
Fig. 14 is a flowchart of an integration counting process.
Fig. 15 is a flowchart showing an ACG power generation control.
Fig. 16 is a drawing showing timing of phase current of a stator coil during the power generation control and an output of a rotor angle sensor.
Fig. 17 is a table of energizing duty, which is set by the number of engine revolution as a parameter.
Fig. 18 is a table of the regulator target voltage which is set the number of engine revolution as a parameter.

### Best Mode for Carrying Out the Invention

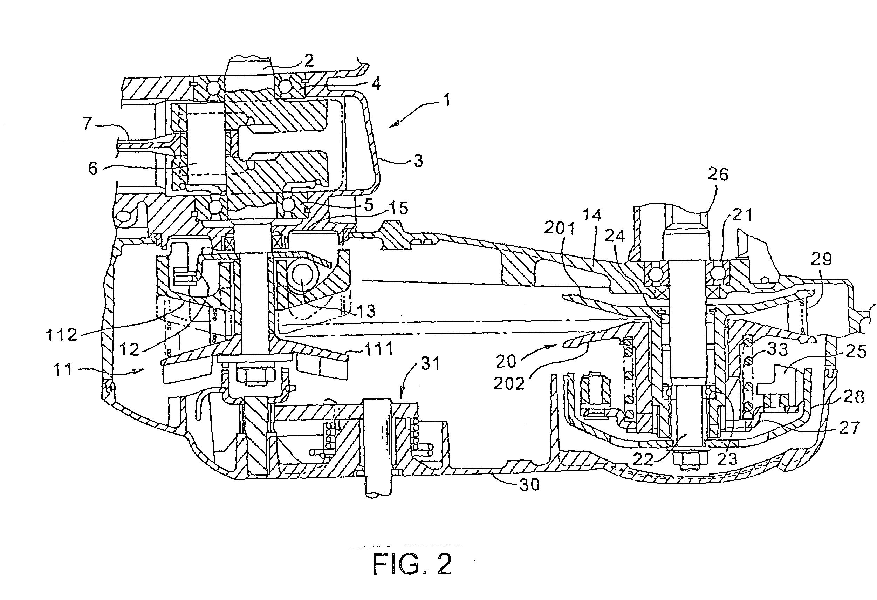

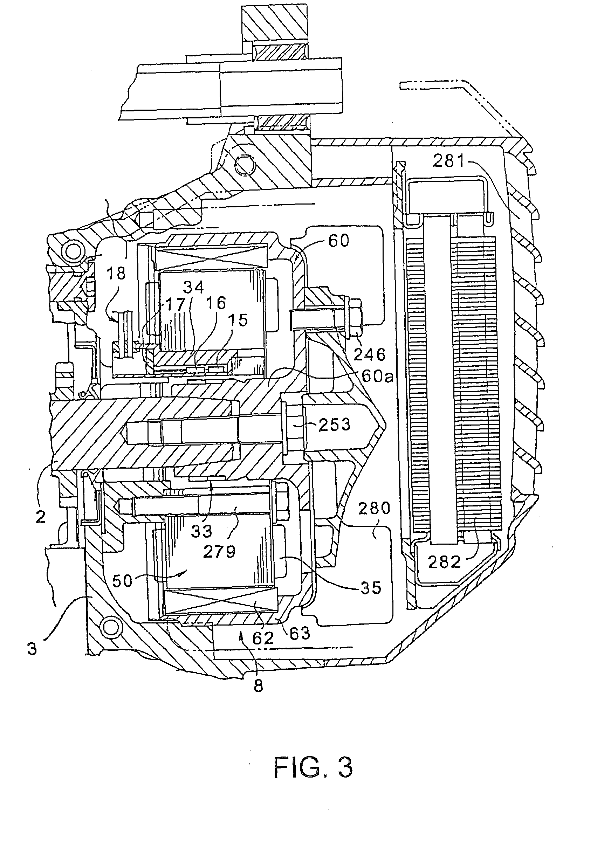

Referring now to the drawings, the present invention will be described in detail. Fig. 2 is a cross-sectional view showing a principal portion of an engine provided with a synchronous power generator to which an output control apparatus of the present invention is applied, and Fig. 3 is a cross-sectional view of the synchronous power generator connected to the engine. In this embodiment, the synchronous power generator is also used as a starter of the engine. Therefore, the synchronous power generator will be described as a "starter-cum-power generator" (hereinafter, referred to as "motor ACG").

In Fig. 2, a crankshaft 2 of an engine 1 is supported by bearings 4, 5 fitted to a crankcase 3. A connecting rod 7 is connected to the crankshaft 2 via a crankpin 6. A driving pulley 11 of a V-belt stepless transmission (hereinafter, referred simply as "stepless transmission") is provided outside the bearing 5. The driving pulley 11 includes a fixed pulley strip 111 and a movable pulley strip 112. The fixed pulley strip 111 is fixed to the position near the end of the crankshaft 2, and is restrained in movement both in the rotational direction and in the axial direction with respect to the crankshaft 2.

On the other hand, the movable pulley strip 112 is restrained in movement in the rotational direction with respect to the crankshaft 2, it is joined so as to be movable in the axial direction (thrust direction) within a predetermined range. A ramp plate 12 slidably engages the movable pulley strip 112. The ramp plate 12 is joined to the crankshaft 2 and rotates integrally therewith. The ramp plate 12 forms a tapered guide for a roller weight 13, which is narrowed toward the outer periphery thereof, in combination with the inner inclination of the movable pulley strip 112 (ramp).

A driven pulley 20, which configures the stepless transmission with the driving pulley 11 in pair, is provided. A driven shaft 22 is rotatably supported by a bearing 21 fitted to a transmission case 14 and another bearing, not shown, and the driven pulley 20 is fixed to the driven shaft 22. The driven pulley 20 is rotatably supported on the driven shaft 22 via bearings 23, 24, while a fixed pulley strip 201 which is restrained in movement in the axially of the driven shaft 22 is provided. Also, a movable pulley strip 202 supported via the fixed pulley strip 201 so as to be capable of sliding axially of the driven shaft 22 is provided.

The fixed pulley strip 201 includes a shoe supporting plate 27 for supporting a clutch shoe 25, which is deviated toward the outer periphery thereof by a centrifugal force. A cup-shaped member 28 having an inner peripheral surface, with which the clutch shoe 25 comes into abutment, is fixed to the driven shaft 22. The cup-shaped member 28 and the clutch shoe 25 in combination constitute a centrifugal clutch. A coil spring 33, being retained by the shoe supporting plate 27 at one end, presses the movable pulley strip 202 at the other end, and constantly urges the same toward the fixed pulley strip 201.

Both of the driving pulley 11 and the driven pulley 20 are V-shaped pulleys, and a V-belt 29 is wound around them. The driven shaft 22 is connected to a driving wheel via a speed reducer including a speed reducing gear 26, for example, to a rear wheel of a motorcycle. The stepless transmission is covered with a cover 30, and a kick starter 31 is supported by the cover 30.

In Fig. 3, a motor ACG 8 includes a stator 50 having a three-phase coil (stator coil) wound thereon, and an outer rotor 60 connected to the end of the crankshaft 2 of the engine 1 and rotating along the outer periphery of the stator 50. The outer rotor 60 includes a cup-shaped rotor case 63 connected to the crankshaft 2, and a magnet 62 to be stored in the inner peripheral surface of the rotor case 63. The magnet 62 is disposed along the periphery of a rotor yoke.

The outer rotor 60 is mounted with the inner periphery of a hub portion 60a fitted to the distal tapered portion of the crankshaft 2, is passed through the center of the hub portion 60a, and is fixed by a bolt 253 which is screwed onto an end screw on the crankshaft 2. The stator 50 which is disposed on the inner peripheral side of the outer rotor 60 is fixed to the crankcase 3 by a bolt 279. The outer rotor 60 is provided with a fan 280 fixed by a bolt 246. A radiator 282 is provided adjacent to the fan 280, and the radiator 282 is covered by a fan cover 281.

Since the motor ACG 8 is positively cooled by cooling air from the fan 280 adjacent to the radiator 282, the amount of heat generation is controlled in conjunction with load control, described later, and hence good heat discharging property is achieved, whereby downsizing is realized.

A sensor case 34 is fitted on the inner periphery of the stator 50, and rotor angle sensors (magnetic pole sensors) 15 and a pulsar sensor (ignition pulsar) 16 are provided at regular intervals along the outer periphery of a boss of the outer rotor 60 in the sensor case 34. The rotor angle sensors 15 serve to control energization of a stator coil 35 of the motor ACG 8, and are provided one for each of U-phase, V-phase, and W-phase of the motor ACG 8. On the other hand, the ignition pulsar 16 serves to control ignition of the engine, and is provided only one. Both of the rotor angle sensors 15 and the ignition pulsar 16 may be formed of hole IC or magnetic resistance (MR) element.

Lead wires of the rotor angle sensors 15 and the ignition pulsar 16 are connected to a substrate 17, and a wire harness 18 is connected to the substrate 17. A magnet ring 19, which is magnetized in two stages for effecting the magnetic action respectively to the rotor angle sensors 15 and the ignition pulsar 16, is fitted to the outer periphery of a boss 60a of the outer rotor 60.

N-poles and S-poles disposed alternately at intervals of 30° in the circumferential direction corresponding to the magnetic poles of the stator 50 are formed on one of magnetized bands of the magnet ring 19 corresponding to the rotor angle sensors 15, and a magnetized portion is formed within the range between 15° and 40° at a position in the circumferential direction on the other magnetized band of the magnet ring 19 corresponding to the ignition pulsar 16.

The motor ACG 8 configured as described above functions as a synchronous motor at the time of starting and hence is driven by a current supplied from the battery and rotates the crankshaft 2 and starts engine 1. Then, after having started, it functions as a synchronous power generator and hence charges the battery with generated current and supplies the current to the respective electric components.

The operation of the motor ACG 8 as a motor is as follows. The outer rotor 60 provided with the magnet 62 is driven by supplying a current to the stator coil 35 in sequence according to the rotational angle detected by the rotor angle sensor 15. Since the crankshaft 2 is connected to the outer rotor 60, it is cranked by the rotation of the outer rotor 60, and when it reaches the number of revolution for ignition, the engine 1 starts self-operation. After having started the self-operation, the control system is switched to the power generator, and hence the motor ACG 8 is operated as an engine power generator.

The roller weight 13 is urged toward the outer periphery by centrifugal force as the number of engine revolution increases, and the movable pulley strip 112 is deviated toward the fixed pulley strip 111. Accordingly, the V-belt 29 increases in its wound diameter with respect to the driving pulley 11, while the decreases in its wound diameter with respect to the driven pulley 20. In other words, the speed reducing ratio is reduced, and the speed of the driven pulley 20 increases. When the rotation of the driven pulley 20 exceeds the number or revolution for connecting the centrifugal clutch, the clutch shoe 25 comes into abutment with a predetermined pressure to the cap-shaped member 28 so that the rotation is transmitted to the driven shaft 22.

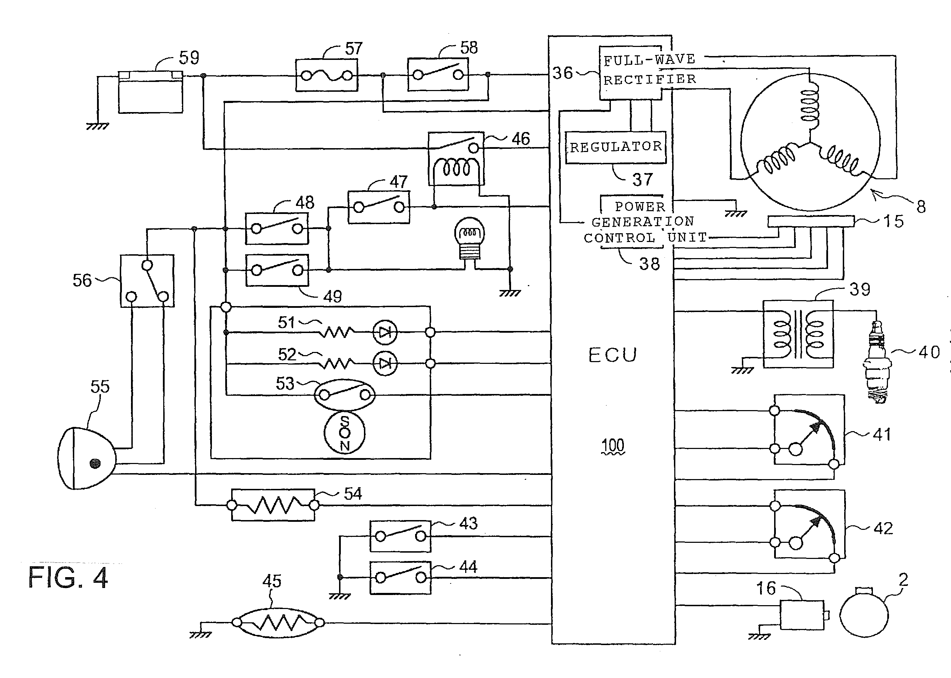

Fig. 4 is an electric system diagram of a principal portion of a motorcycle to which the motor ACG 8 is applied. In the same drawing, an ECU 100 is provided with a full-wave rectifier 36 for rectifying a three-phase alternate current generated at the motor ACG 8 and a regulator 37 for restricting the output of the full-wave rectifier 36 to a predetermined regulator target voltage V. The ECU 100 is also provided with a power generation control unit 38 for controlling the amount of power generation by an accelerating state or a buttery voltage. The power generation control unit 38 is implemented as a function of a CPU. The rotor angle sensors 15 and the ignition pulsar 16 are also connected to the ECU 100, and its detected signal is supplied to the ECU 100.

An ignition coil 39 is connected to the ECU 100, and an ignition plug 40 is connected to the secondary side of the ignition coil 39. A throttle sensor 41, a fuel sensor 42, a seat switch 43, an idle switch 44, and a coolant temperature sensor 45 are connected to the ECU 100, and the detected signals are supplied from the respective members to the ECU 100.

Furthermore, a starter relay 46, a starter switch 47, stop switches 48, 49, a stand-by indicator 51, a fuel indicator 52, a speed sensor 53, an motorcycle starter 54, and a headlight 55 are connected to the ECU 100. A dimmer switch 56 is provided on the headlight 55.

A current is supplied from a battery 59 to the respective components described above via a main fuse 57 and a main switch 58. The battery 59 is directly connected to the ECU 100 by the starter relay 46, while it has a circuit to be connected to the ECU 100 not via the main switch 58, but only via the main fuse 57.

The power generation control unit 38 switches the regulator target voltage V between any one of preset high and low voltages (for example, high voltage (VH):14.2 volt, low voltage (VL) :12.4 volt) based on the accelerating state of the engine 1. Then, the amount of power generation is controlled by energizing the stator coils 35 of the respective phases of the motor ACG 8 with lag or advance (hereinafter, referred to as "ACG energization control") so that the difference between the regulator target voltage V and a battery voltage Vb is compensated. Especially in the case in which the engine satisfies the predetermined accelerating conditions and hence it is determined to be in the accelerating state, the regulator target voltage V is switched to the low voltage VL, and when it is not in the accelerating state (referred to as "under normal operation"), the regulator target voltage V is switched to the high voltage VH. When the predetermined restoration conditions are satisfied in a state in which it is switched to the low voltage VL, the regulator target voltage V is switched to the high voltage VH. In the following description, the process of switching the regulator target voltage V to the high voltage VH is specifically referred to restore the regulator target voltage V.

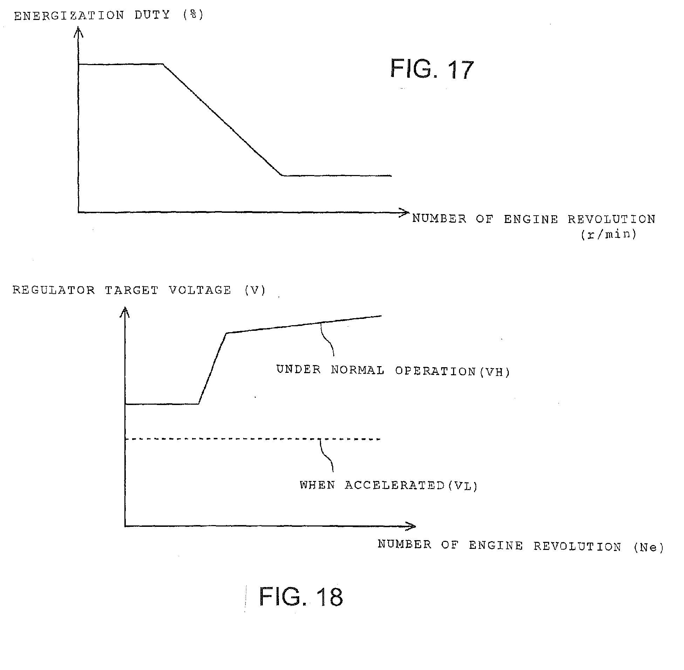

Energization with lag or advance means to energize the stator coil 35 with lag or advance to an extent corresponding to a predetermined electric angle from the detected signal obtained by the rotor angle sensor 15 when the magnetic pole of a magnetized band 19 is changed. In the present embodiment, the regulator target voltage corresponding to the under normal control or to every acceleration is selected from the two types of voltage, that is, from high voltage and low voltage. However, it is also possible to provide a table of low voltage VL and high voltage VH corresponding to the number of revolution of the engine (see Fig. 18), and performs ACG energization control so that the battery voltage is astringed to the regulator target voltage searched in the table.

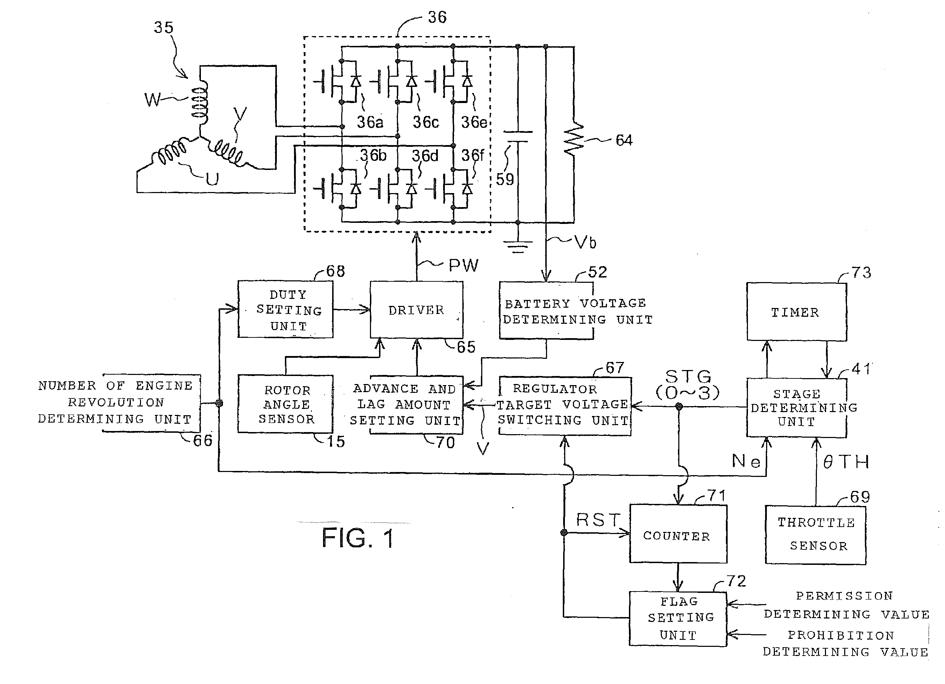

Fig. 1 is a block diagram showing a function of a principal portion of the ACG energization control device. In the same drawing, the full-wave rectifier 36 includes FETs (in general, solid-state switching elements) 36a, 36b, 36c, 36d, 36e, 36f connected respectively to U, V, W phases of the stator coil 35 of the motor ACG 8, and when the engine 1 is started, the FETs 36a-36f are switched by a driver 61, and the motor ACG 8 is driven and as a synchronous electric motor so that the crankshaft 2 is rotated. On the other hand, after having started the engine 1, the outer rotor 60 in turn is driven by the engine 1 and functions as the synchronous power generator, then the generated alternate current is rectified at the FETs 36a-36f and distributed to the battery 59 or an electric load 64. During power generation by engine drive, the FETs 36a-36f are controlled by a driver 65 so that energization to the stator coil 35 with lag or advance is performed to increase or decrease the amount of power generation.

The number of engine revolution determining unit 66 detects the number of engine revolution Ne based on detected signal of the ignition pulsar 16 or frequency signal of the generated voltage, and the detected number of engine revolution Ne is supplied to a stage determining unit 41 and a duty setting unit 68. Voltage values VH, VL on the high-side and low-side are stored in a regulator target voltage switching unit 67, and a correspondence table (Fig. 17) between the energizing duty and the number of engine revolution is provided in the duty setting unit 68. A throttle sensor 69 detects an opening θTH of the throttle valve. The stage determining unit 41 determines which stage the switching operation of the regulator target voltage V is in, that is, which operating stage (hereinafter, referred simply as "stage") it is in based on the number of engine revolution Ne and/or throttle opening θTH, and determination of the elapsed time by a timer 73. The regulator target voltage switching unit 67 performs predetermined determination according to the current stage, and determines which one of high-side or low-side the regulator target voltage V is to be switched, and supplies the result, that is, the determined regulator target voltage V into an advance and lag amount setting unit 70.

A counter 71 integrates a time period in which the stage is in an action stage (third and fourth stages, described later), and supplies into a flag setting unit 72. When the integrated time reaches a prohibition decision value, the flag setting unit 72 puts a switch permission flag for the regulator target voltage down. Then, when it proceeds to an unexecuted and action-waiting stage (first and second stage, described later) other than the action stage, the counter 71 subtracts the integrated time in reverse. When the integrated time is subtracted to a switch permission determination value, the flag setting unit 72 put the switch permission flag on. This flag is determined by the regulator target voltage switching unit 67. When the permission flag is put on, the regulator target voltage switching unit 67 is energized, and when the permission flag is put down, the regulator target voltage switching unit 67 is de-energized.

Based on the battery voltage Vb detected by a battery voltage determining unit 71 and the regulator target voltage V, the advance and lag amount setting unit 70 determines either one of advance or lag so that the battery voltage Vb is astringed in the regulator target voltage V, and supplies it to the driver 65. When the battery voltage Vb is higher than the regulator target voltage V, it is energized with advance, and when the battery voltage Vb is lower than the regulator target voltage V, it is energized with lag. The amount of advance or lag may be changed according to the difference between the battery voltage Vb and the regulator target voltage V, or may be advanced or lagged by a constant amount.

The driver 65 controls the FETs 36a-36f so that the stator coil 35 is energized based on the instruction relating to advance or lag (may include the amount of advance or lag) and the energizing duty supplied from the duty setting unit 68. In response to a magnet pole detected signal by the rotor angle sensor 15, the driver 65 detects signals which is turned ON every time when the sensor 15 detects the magnetized band of the magnet ring 19, which is formed corresponding to the magnetic pole of the outer rotor 60. Then, it outputs PWM control signal displaced by the amount corresponding to the advance or the energization lag amount from the rising of the signal to the FETs 36a-36f.

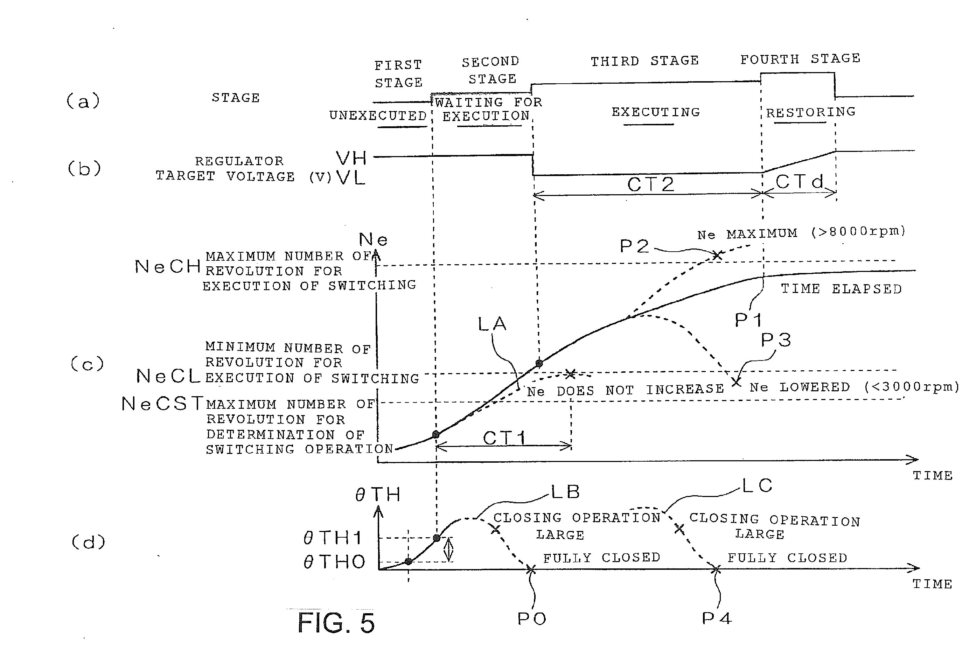

Fig. 5 is a time chart showing an outline of switching operation of the regulator target voltage. Fig. 5(a) shows a stage in the switching control, and Fig. 5(b) shows an example of variation in the regulator target voltage V corresponding to the respective action stages. In Figs. 5 (a) and 5(b), the first stage is a state in which the regulator target voltage V is not switched, and the second stage is a preparatory stage before deciding whether or not it is to be proceeded to the switching operation of the regulator target voltage V. In the first and second stages, the regulator target voltage V is switched to the predetermined high voltage VH. In the third stage the switching operation of the regulator target voltage V is performed. In the third stage, the regulator target voltage V is switched to the predetermined low voltage VL. The third stage is maintained until a time period CT 2 is elapsed at the maximum. In addition, in the third stage, determination for restoring the regulator target voltage V to the high voltage VH is performed. The fourth stage is a stage in which the restoration process is performed based on the determination that the regulator target voltage V should be restored. In the fourth stage, the regulator target voltage V is gradually changed from the low voltage VL to the high voltage VH. The fourth stage is finished until a time period CTd has elapsed.

Fig. 5(c) is a drawing showing a relation between the number of engine revolution Ne and the stage. Fig. 5(d) is a drawing showing the relation between the throttle opening θTH and the stage. As shown in Figs. 5(c), (d), when the number of engine revolution Ne does not exceed the maximum number of revolution for decision of switching operation NeCST, or when the amount of change of the throttle opening θTH, ΔθTH (θTH1-θTH0) is smaller than the predetermined amount CST (not quickly opened), it is the first stage. Then, when the number of engine revolution Ne exceeds the maximum number of revolution for decision of switching operation NeCST, or when the amount of change of the throttle opening ΔθTH exceeds the predetermined amount CST (throttle is quickly opened), it proceeds to the second stage, and waits for switching of the regulator target voltage V.

However, when it is proceeded to the second stage, and when the number of engine revolution Ne does not reach the minimum number of revolution for decision of switching operation NeCL even when a predetermined time period CT1 as the execution decision period has elapsed (shown by a dotted line LA in the drawing), it returns to the first stage. Even after having proceeded to the second stage, when the operation to close the throttle to a significant extent is executed (-ΔθTH > predetermined amount GRT), that is, in the state shown by a dotted line LB, it returns to the first stage. In addition, when the throttle is brought into the fully closed state, it returns to the first stage at the timing (P0).

On the other hand, after having proceeded to the third stage, and the predetermined time period CT2 has elapsed, it returns to the first stage at a time point P1 when the time period in question has elapsed. When the number of engine revolution Ne exceeds the maximum number of revolution for execution of switching operation NeCH (for example, 8000 rpm) as the number of revolution for prohibiting restriction, or when the number of engine revolution Ne does not exceed the minimum number of revolution for execution of switching operation NeCL (for example, 3000 rpm), it returns to the first stage at these time points P2, P3. In other words, when the number of engine revolution Ne is maintained in the predetermined range of number of revolution (NeCL-NeCH), the third stage is maintained until the time period CT2 elapses, and the regulator target voltage V is maintained to the low voltage VL. However, when the number of engine revolution Ne exceeds the set value NeCH, it returns to the first stage when the number of revolution in question is maintained at least for a time period CT3.

When the throttle is closed by a large extent (dotted line LC), and when the throttle is fully closed (time point P4), it proceeds from the third stage to the first stage.

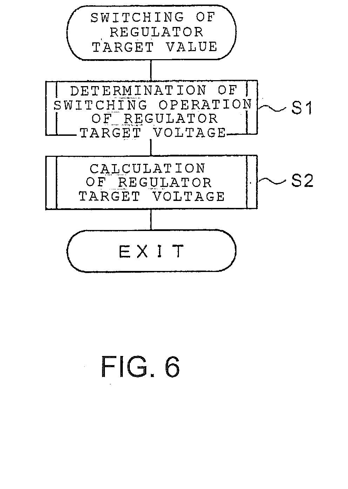

The operation as described above will be explained referring to flowcharts in Fig. 6 to Fig. 12. Fig. 6 is a flowchart showing an entire switching process of the regulator target voltage. In Step S1, determination of switching operation of the regulator target voltage is performed. In other words, determination whether or not conditions for switching the regulator target voltage V from the high voltage VH to the low voltage VL or conditions for restoring from the low voltage VL to the high voltage VH are satisfied is performed. In Step S2, the regulator target voltage is calculated and the process is terminated.

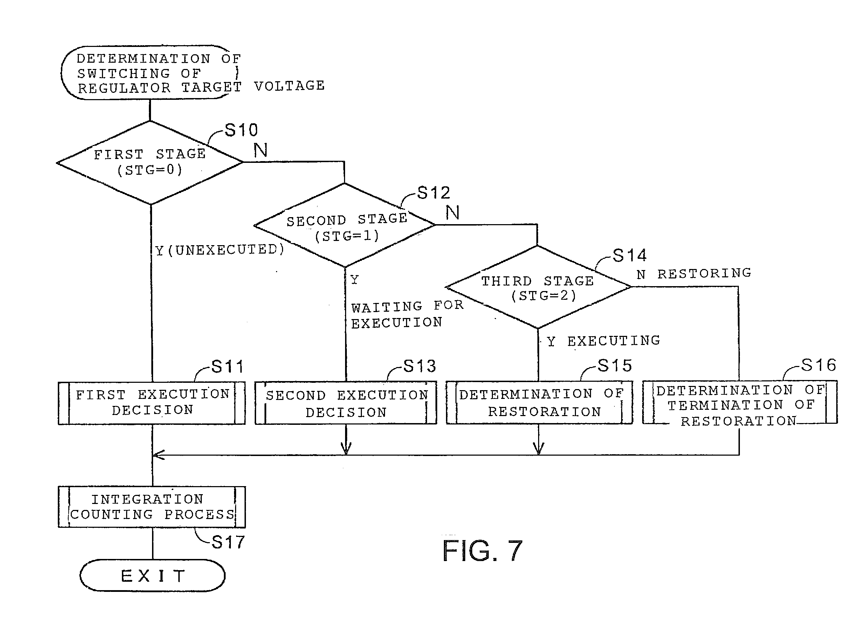

Fig. 7 is a flowchart showing details of determination of switching operation of the regulator target voltage. In Step S10, whether or not the current stage is the first stage, that is, whether or not conditions for switching the regulator target voltage V to the low voltage VL are satisfied is determined. Determination of the stage is determined by flag STGs. The flag STGs "0", "1", "2", "3" represent that the current stage is the first, second, third, or fourth stage, respectively.

For example, when the throttle opening θTH is smaller than the predetermined value, or when it is in the predetermined low revolution range, it is in the first stage and hence the flag STG is set to "0". When the current stage is the first stage, that is, when the switching is not executed, the procedure goes from Step S10 to Step S11, where the first execution decision is performed.

When the current stage is not the first stage, the procedure goes from Step S10 to Step S12, where whether or not it is the second stage (STG="1" or not), that is, whether or not conditions for switching the regulator target voltage V to the low voltage VL are satisfied is determined. The range from the timing when it is determined to be the first stage until it is determined that the number of engine revolution Ne reaches the minimum number of revolution NeCL for executing switching operation of the regulator target voltage V is the second stage. When the current stage is the second stage, the procedure goes to Step S13 to perform the second execution decision.

When the current stage is not the second stage, the procedure goes from Step S12 to Step S14, and whether or not it is the third stage is determined. The third stage is a stage after the second stage where it is determined that switching operation of the regulator target voltage V is to be executed. In other words, the third stage is a state in which the switching operation of the regulator target voltage V is being executed. When the current stage is the third stage, the procedure goes to the Step S15, where determination whether or not the regulator target voltage V is restored to the high voltage VH is performed. Conditions to proceed the restoration process will be described later.

When the current stage is not the third stage, it is determined to be in a state in which the process to restore the regulator target voltage V to the high voltage VH is performed, that is, in the fourth stage. Therefore, the procedure goes to Step S16, where determination of conditions for terminating the restoration process is performed. After Steps S11, S13, S15, S16, the procedure goes to Step S17, where integration counting process is performed.

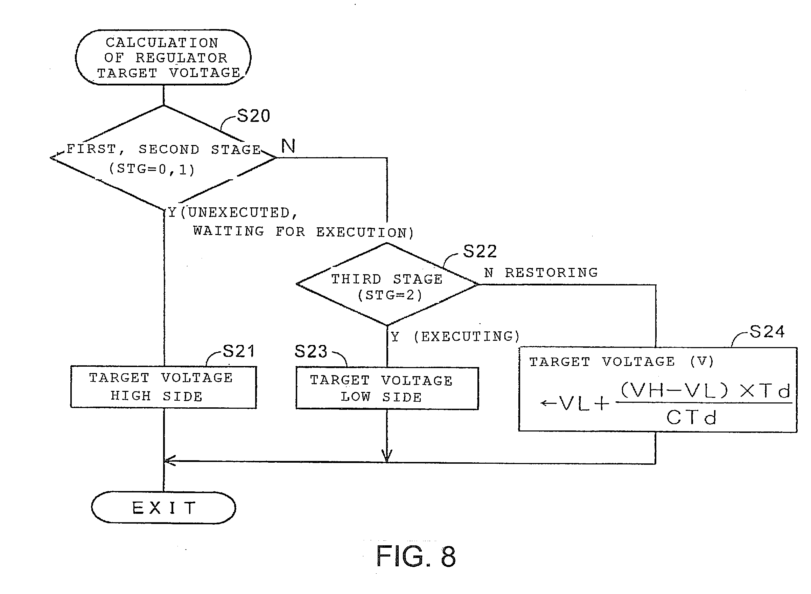

Subsequently, a calculation process of the regulator target voltage will be described. As shown in Fig. 8, in Step S20, determination whether or not the current stage is the first stage or the second stage is performed. When the current stage is the first stage or the second stage, the procedure goes to Step S21, where the high voltage VH is set as the regulator target voltage V. When the current stage is neither the first stage nor the second stage, the procedure goes to Step S22, where whether or not the current stage is the third stage is determined. When the current stage is the third stage, the procedure goes to Step S23, where the low voltage VL is set as the regulator target voltage V.

When the current stage is not any one of the first to the third stages, it is determined to be the fourth stage. Therefore, the procedure goes to Step S24, where a restoration target voltage is calculated, and the calculated value is set as the regulator target voltage V. The restoration target voltage is a voltage value which changes step-by-step with the elapsed time as a function in order to return the regulator target voltage V gradually from the low voltage VL to the high voltage VH. The calculation expression is determined according to the ratio of a time Td elapsed from the initiation of restoration with respect to the predetermined time CTd for restoring the target voltage V to the high voltage VH (Td/CTd) as shown in Step S24 in Fig. 8. In other words, increment of voltage is added to the low voltage VL with the function of the elapsed time from the initiation of restoration, and then the regulator target voltage V is returned gradually to the high voltage VH.

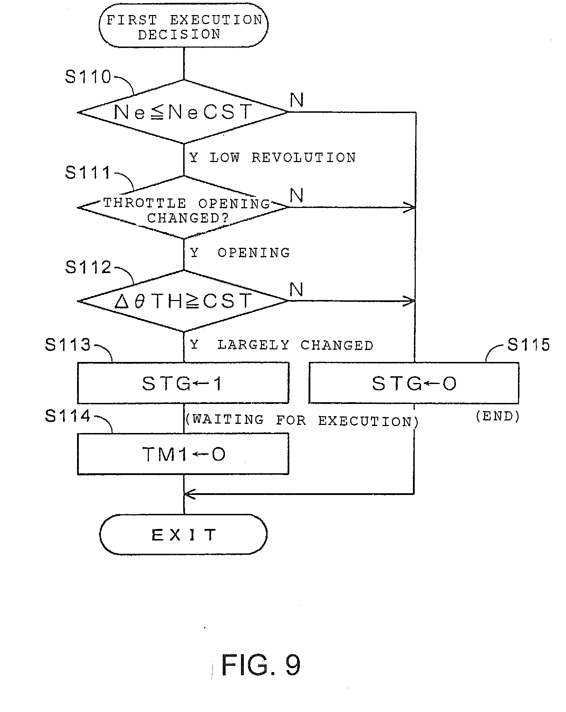

Referring now to Fig. 9, the first execution decision (Step S11) will be described. In step S110, whether or not the number of engine revolution Ne is a low revolution which does not exceed the maximum number of revolution NeCST for determining switching operation is determined. When the engine is in the low revolution range, the procedure goes to Step S111 and determines whether the throttle opening is changed to a throttle opening direction or to a closing direction. When the throttle is in the opening direction, the procedure goes to Step S112, where whether or not the amount of change of the throttle opening ΔθTH in the opening direction is larger than the predetermined amount CST, that is, whether or not the throttle is quickly opened or not, is determined. When the throttle is opened quickly, it is determined that the current state is in the second stage, and hence the procedure goes to Step S113, where the flag STG is set to "1". In Step S114, a timer TM1 for waiting execution of switching operation is reset to zero. When it is determined that the engine is in the high revolution in Step S110, when it is determined that the throttle is changing in the closing direction in Step S111, and when it is determined that the throttle is not opening quickly in Step S112, conditions for switching the regulator target voltage V to the low voltage VL are not satisfied, and hence it is determined to be in the first stage. Therefore, the procedure goes to Step S115, where the flag STG is set to "0".

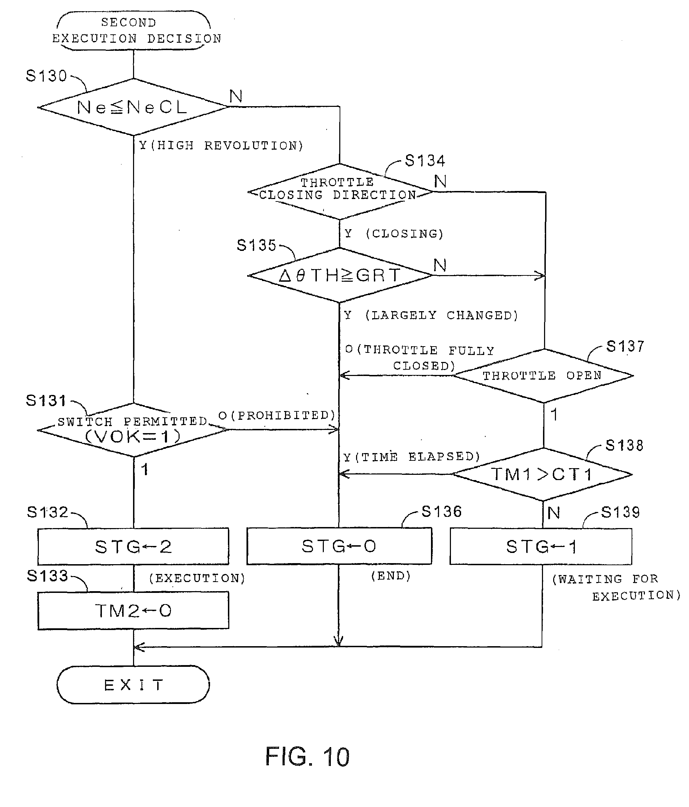

Referring now to Fig. 10, the second execution decision (Step S13) is described. In Step S130, whether or not the number of engine revolution Ne is equal to, or exceeds the minimum number of revolution NeCL for determining continuation of execution of switching operation is determined. When the number of engine revolution is equal to, or exceeds the minimum number of revolution NeCL, the procedure goes to Step S131, where a regulator target voltage switching permission flag VOK is discriminated. When the flag VOK is "1", it means that switching of the regulator target voltage is permitted, the procedure goes to Step S132, where the flag STG is set to "2" for indicating the third stage. In Step S133, a timer TM2, which measures the period of continuation of the state in which the regulator target value is switched to the low side, is reset to zero.

When the number of engine revolution is in the low revolution range which does not exceed the minimum number of revolution NeCL in the second stage, the result of determination in the step S130 is negative, and the procedure goes to Step S134, where whether or not the throttle is changed in the closing direction is determined. When the throttle is changing in the closing direction, the procedure goes to Step S135, where whether or not the amount of change ΔθTH of the throttle opening in the closing direction is larger than the predetermined amount GRT, that is, whether or not the throttle is quickly closed, is determined. When the throttle is quickly closed, it is determined that the acceleration is stopped, and hence the procedure goes to Step S136, where the flag STG is set to "0" to indicate that the current stage is the first stage.

When it is determined that the throttle is not changing in the closing direction in Step S134, the procedure goes to Step S137, where whether or not the throttle is opened is determined. When it is determined that the throttle is opened, the procedure goes to the Step S138, where whether or not the timer value TM1 representing the elapsed time in the second stage exceeds the predetermined elapsed time CT1 is determined. When the predetermined elapsed time CT1 is elapsed, it is determined that the regulator target voltage is not switched, and the procedure goes to Step S136, where the flag STG is set to "0". When the time CT1 is not elapsed, it is determined that the second stage is to be maintained, and the procedure goes to Step S139, where the flag STG is set to "1".

When the throttle is fully closed (the determination in Step S137 is negative), and when it is determined that the flag VOK is "0", that is, switching of the regulator target voltage is not permitted in Step S131, the procedure goes to Step S136, where the flag STG is set to "0" to proceed the first stage.

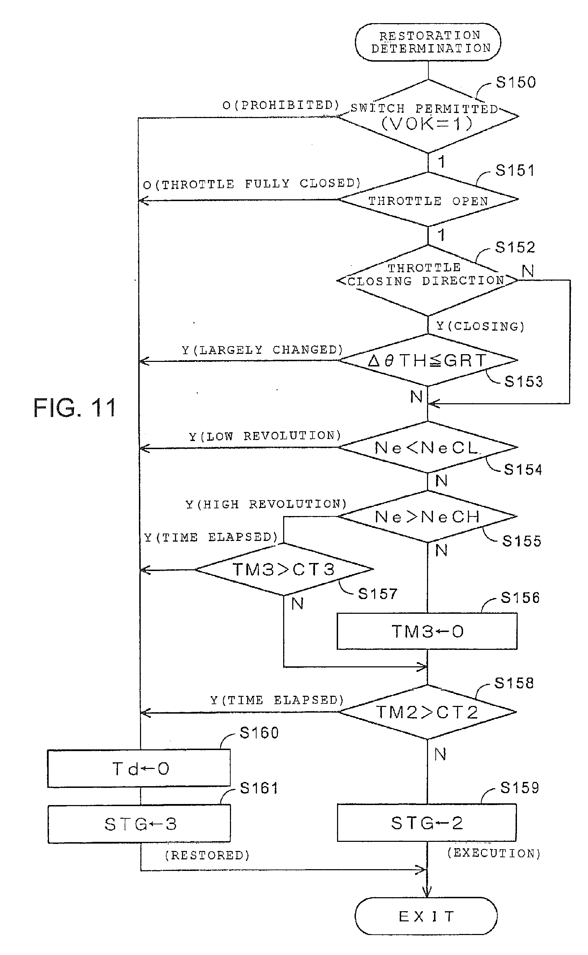

Referring now to Fig. 11, the restoration decision (Step S15) will be described. In Step S150, the regulator target voltage switching permission flag VOK is discriminated. When the flag VOK is "1", it means that switching of the regulator target voltage is permitted, the procedure goes to Step S151, where whether or not the throttle is opened is determined. When it is determined that the throttle is opened, the procedure goes to the Step S152, where whether or not the throttle is changing in the closing direction is determined. When the throttle is changing in the closing direction, the procedure goes to Step S153, where whether or not the amount of change ΔθTH of the throttle in the closing direction is larger than the predetermined amount GRT, that is, whether or not the throttle is quickly closed is determined. When the throttle is not closed quickly, the procedure goes to Step S154, where whether or not the number of engine revolution Ne is in low revolution, which does not exceed the minimum number of revolution NeCL for execution decision of switching operation, is determined. When the number of engine revolution Ne exceeds the minimum number of revolution NeCL, the procedure goes to Step S155, where whether or not the number of engine revolution Ne exceeds the maximum number of revolution NeCH for the execution decision of switching operation is determined. When the number of engine revolution does not exceed the maximum number of revolution NeCH, the procedure goes to Step S156, where a value TM3 of the timer for measuring the period in which the number of engine revolution exceeds the maximum number of revolution NeCH is reset to zero.

When it is determined that the number of engine revolution Ne is high revolution which exceeds the maximum number of revolution NeCH in Step S155, whether or not the timer value TM3 has elapsed the predetermined time period CT3 is determined in Step S157. When the predetermined time period CT3 is not elapsed, the procedure goes to Step S157.

In step S158, whether or not the timer TM2 for measuring the time period in which the regulator target voltage is continuously in the state of being switched to the low voltage VL has passed the predetermined time period CT2 is determined. When the determination is negative, the flag STG is set to "2" in Step S159 for indicating that the third stage is to be maintained.

When the lowering of the regulator target voltage is prohibited in Step S150, when the throttle is determined to be fully closed in Step S151, and when it is determined that change of the throttle opening θTH in the closing direction is large in Step S153, the procedure goes to Step S160. Even when the throttle opening θTH is large, if the number of revolution Ne is low (affirmative in Step S154), if it is determined that the time period CT3 has elapsed in Step S157, and if it is determined that the time CT2 has elapsed in Step S158, the procedure also goes to Step S160. In Step S160, the timer value Td is reset to zero. In step S161, the flag STG is set to "3" to indicate that the stage is proceeded to the fourth stage.

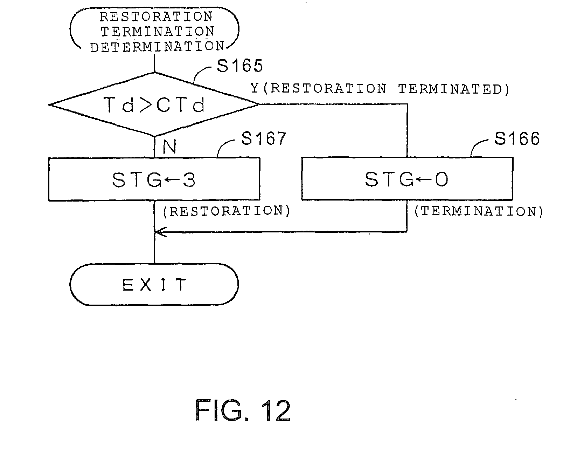

Referring now to Fig. 12, restoration termination decision (Step S16), that is, the determination process whether or not restoration of the regulator target voltage V to the high voltage VH is completed, will be described. In Step S165, whether or not the elapsed time Td from the initiation of restoration exceeds the predetermined time period CTd for restoring to the high voltage VH, that is, whether the time period sufficient for restoring the regulator target voltage has elapsed, is determined. When the determination is affirmative, the flag STG is set to "0" in Step S166. On the other hand, when the determination in Step S160 is negative, the flag STG is set to "3" in Step S167 to indicate that the fourth stage, that is, the regulator target voltage restoration process is continued.

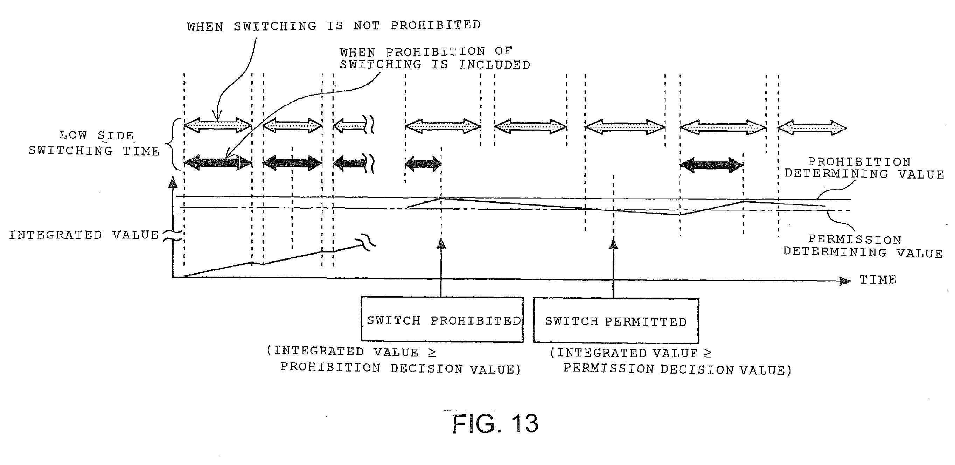

In addition to the aforementioned conditions for determination, the case of prohibiting control for switching the regulator target voltage V to the low voltage VL and the case of releasing the prohibition are set according to the aforementioned integrating process. Fig. 13 shows an outline of the integrating process. In Fig. 13, the time when the regulator target voltage V is not switched to the high voltage VH, that is, the time period of being in the third and fourth stages is integrated, and when the integrated time period (integrated value) exceeds a prohibition decision value, the permission flag VOK is clear to "0". On the other hand, after having returned to the first and second stages, the integrated time period is subtracted in reverse. Then, when the integrated time period is reduced to a permission decision value, the permission flag is set to "1" to permit the process of switching the regulator target voltage V to the low voltage VL.

By allocating adding operation to the third stage, maintenance of the value to the fourth stage, and subtracting operation to the first and second stages, further accurate charged state is achieved. As shown in the drawings, since restriction of the amount of power generation is smaller in the case of including control for switching the regulator target voltage V to the low voltage VL according to the integrated time period than the case of not including control for prohibiting lowering of the regulator target voltage, excessive discharge may be prevented.

It is preferable that a subtracting speed is set to a smaller value than an integrating speed. Accordingly, the time period in which the regulator target voltage V is switched to the low voltage VL is prevented from becoming too long, and hence excessive discharge of the battery can further be restrained.

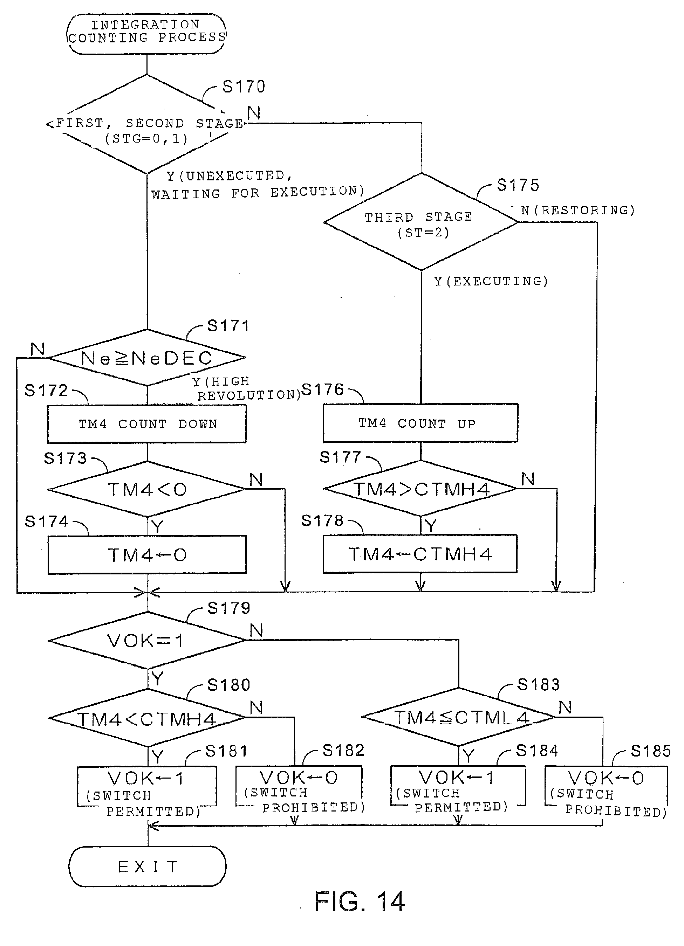

Referring now to Fig. 14, the process of deciding prohibition and permission of lowering of regulator target voltage, that is, the aforementioned integration counting process (Step S17) will be described. In Step S170, whether or not the current stage is any one of the first or the second stage is determined. When the current stage is the first or the second stage, the procedure goes to Step S171. In Step S171, whether or not the number of engine revolution Ne exceeds the minimum number of revolution NeDEC for determining whether or not the subtraction for prohibiting switching of the regulator target voltage V is to be performed, is determined. When the number of engine revolution Ne is higher than the preset number of revolution NeDEC, a switching prohibition timer value TM4 is decremented in Step S172. In other words, the value subtracted by the amount of predetermined subtraction is set to the timer value TM4. In Step S173, whether or not the timer value TM4 is reduced to zero or below is determined. When the determination is affirmative, the procedure goes to Step S174, and the timer value TM4 is reset to zero, and then the procedure goes to the step S179.

When the determination in Step S170 is negative, that is, when the current stage is neither the first nor the second stage, the procedure goes to Step S175, where whether or not the current stage is the third stage, that is, whether the regulator target voltage V is being switched to the low voltage VL or being restored to the high voltage VH is determined. When the determination in Step S175 is affirmative, the switching prohibition timer value TM4 is incremented in Step S176. In other words, the value added with the predetermined amount of addition is set to the timer value TM4. In Step S177, whether or not the timer value TM4 exceeds a predetermined value CTMH4 is determined. The predetermined value CTMH4 is a value on the higher side considering hysteresis. When the determination in this step is affirmative, the procedure goes to Step S178, where the predetermined value CTMH4 is set as the timer value TM4 to proceed to the step S179.

When the Step S171 is negative (low revolution), when the determination in Step S173 is negative, that is, when the timer value TM4 is zero or larger, and when the determination in Step S177 is negative, that is, when the timer value TM4 exceeds the predetermined value CTMH4, the procedure goes to Step S179.

In Step S179, whether or not the regulator target voltage switching permission flag VOK is "1" is determined. When the determination in Step S179 is affirmative, the procedure goes to Step S 180, where whether or not the timer value TM4 does not exceed the predetermined value CTMH is determined. When the determination in Step S180 is affirmative, the procedure goes to Step S181, where the regulator target voltage switching permission flag VOK is set to "1". When the determination in Step S180 is negative, it is determined that the third stage is maintained for the time period corresponding to the predetermined value CTMH4. Therefore, the procedure goes to Step S182, where the maintenance flag VOK is set to "0" to prohibit switching of the regulator target voltage.

When the determination in Step S179 is negative, the procedure goes to Step S183, where whether or not the timer value TM4 underruns a predetermined value CTML4 is determined. The predetermined value CTML4 is a value on the lower side including hysteresis. When the determination in Step S183 is affirmative, the procedure goes to Step S184, where the regulator target value switching permission flag VOK is set to "1". When the determination in Step S183 is negative, since it is determined that the third stage has been maintained for the time period corresponding to the predetermined value CTML4, the procedure goes to Step S184 to set the maintenance flag VOK to "0" to prohibit switching of the regulator target voltage.

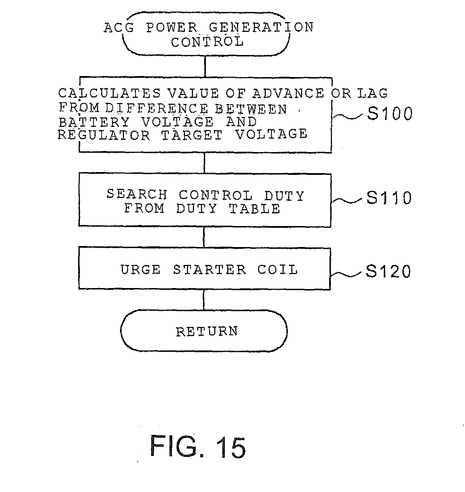

Fig. 15 is a flowchart showing an ACG power generation control based on the regulator target voltage V decided in the aforementioned process. In Step S100, the advance value or lag value is calculated based on deviation of the current battery voltage Vb with respect to the decided regulator target voltage V. In other words, when the battery voltage is lower, the stator coil 35 is energized with lag to increase the amount of power generation, while when the battery voltage is higher, the stator coil 35 is energized with advance to reduce the amount of power generation. In Step S110, the energizing duty according to the number of engine revolution Ne is searched from a duty value table (Fig. 17). In Step S120, the stator coil 35 is energized according to the aforementioned lag or advance value and the energizing duty value.

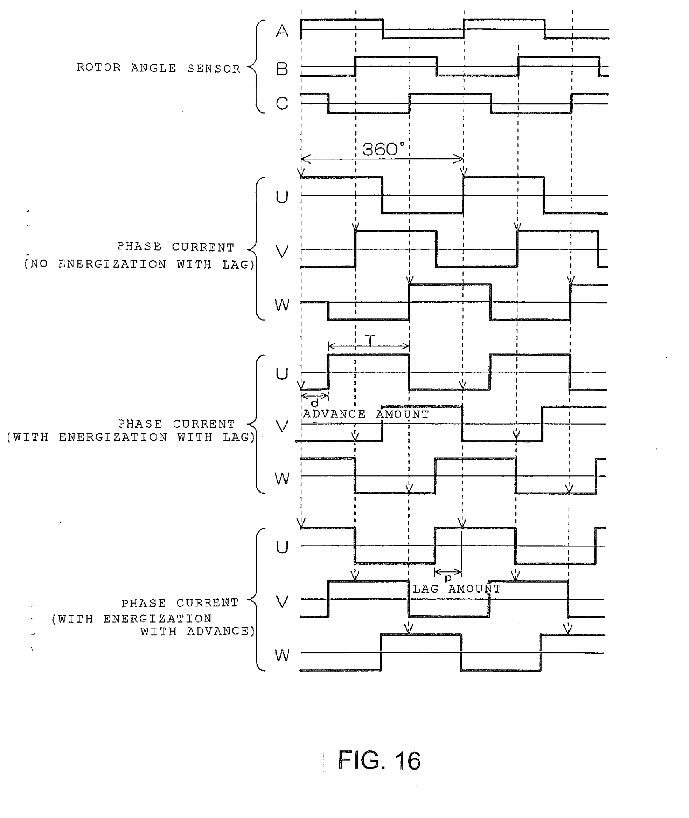

Fig. 16 is a drawing showing timings of current (phase current) flowing in each phase of the stator coil 35 during the ACG energization control and the output of the rotor angle sensor 15. As shown in the drawing, in a normal state during which the ACG energization control is not performed (no energization with lag), a current is supplied to the respective phases of U, V, and W of the stator coil 35 in response to the change of positive and negative (NS) of the detected output of the rotor angle sensor 15.

In contrast, when the energization control with lag is performed, a current is supplied to the respective phases of U, V, and W of the stator coil 35 with the calculated amount of lag d from the timing when the detected output of the rotor angle sensor 15 is changed between positive and negative (NS).

When the energization control with advance is performed, a current is supplied to the respective phases of U, V, and W of the stator coil 35 at the timing when the phase is advanced by the amount of advance p, which is calculated in Step S5, prior to the timing when the detected output of the rotor angle sensor 15 is changed between positive and negative.

In Fig. 16, an energizing angle T by the duty chopping is 180°, it can be set to the value within the range of 180° by energizing duty supplied from the duty setting unit 68 to the driver 65.

Fig. 17 is a table of energizing duty, which is set the number of engine revolution, that is, the number of revolution of the power generator as a parameter. The number of engine revolution Ne is detected, and in Step S110 described above, the energizing duty according to the number of engine revolution Ne is determined referring to Fig. 17.

In the above-described embodiment, switching of the regulator target voltage V to the low voltage V1 is prohibited or permitted by determining the amount of power generation based on the function of time. However, it is because the amount of power generation can be determined easily by the function of time, and it is not limited thereto.

Also, in the power generator of the embodiment, the outer rotor/inner rotor system is employed and the permanent magnet is disposed as a magnetic field flux generating magnet means in the outer rotor. However, the present invention may also be applied to a power generator having the magnetic field flux generating magnet means in the inner rotor or a power generator employing an electromagnet as the field flux generating magnetic means. The present invention may be applied not only to the motor ACG of a motorcycle, but also to a multi-purpose engine drive power generator and the like as a matter of course.

### Reference Numerals

1...engine, 2...crankshaft, 3...crankcase, 8...motor ACG 11...driving pulley, 14...transmission case, 15...rotor angle sensor, 16...ignition pulsar, 20...driven pulley, 35...stator coil, 36...full-wave rectifier, 38...power generation control unit, 41...stage determining unit, 52...battery voltage determining unit, 60...outer rotor, 62...magnet, 65...driver, 66...number of engine revolution determining unit, 67...regulator target voltage switching unit, 68...duty setting unit, 69...throttle sensor, 70...advance and lag amount setting unit, 71...counter

## Claims

1. An output control apparatus for a synchronous power generator having a rotor provided with a magnetic field flux generating magnet means driven by an engine and a stator on which a stator coil for generating power generating output is wound, comprising:
throttle operating velocity detecting means for detecting the speed of change of a throttle opening;
means for determining an accelerating state of the engine based at least on the speed of change of the throttle opening and restricting the amount of power generation; and
control means for prohibiting restriction of the amount of power generation when the restricted amount of power generation reaches a predetermined amount, and permitting restriction of the amount of power generation when the restricted amount of power generation is restored to the predetermined amount.

2. An output control apparatus for a synchronous power generator according to Claim 1, **characterized in that** the restricted amount of power generation is determined by a function of time in which the amount of power generation is restricted.

3. An output control apparatus for a synchronous power generator according to Claim 2, **characterized in that** the function of time is weighed in different ways so that the restricted amount of power generation is recognized to be a large value when restriction of the amount of power generation is permitted and is recognized to be a small value when restriction of the amount of power generation is prohibited.

4. An output control apparatus for a synchronous power generator according to Claim 1 or Claim 2, further comprising a regulator for restricting a voltage of generated power of the power generator to a predetermined regulator target voltage,
**characterized in that** the means for restricting the amount of power generation includes means for switching the regulator target voltage and means for controlling the phase energizing angle of the power generator so that the difference between the regulator target voltage and the battery voltage is compensated.

5. An output control apparatus for a synchronous power generator according to Claim 1, **characterized in that** when the number of engine revolution exceeds the maximum number of revolution for execution of restriction, restriction of the amount of power generation is prohibited.

6. An output control apparatus for a synchronous power generator according to Claim 1, further comprising means for determining the number of engine revolution for determining the accelerating state,
**characterized in that** when the number of engine revolution does not reach the number of revolution for prohibiting restriction within a predetermined execution decision period, restriction of the amount of power generation is prohibited.
